# EUROPEAN PATENT SPECIFICATION

(11) **EP 1 981 255 B1**
(45) Date of publication and mention of the grant of the patent: **20.01.2010**
(21) Application number: 07290453.5
(22) Date of filing: 12.04.2007
(51) Int. Cl.: H04M 3/18, H02J 1/10

(54) **Surge protection circuit for ORing circuitry of power supplies**
Überspannungsschutzschaltung für die ORing-Schaltung von Netzteilen
Circuit de protection contre la surtension pour circuit d'exécution de l'opération OU d'alimentations électriques

(43) Date of publication of application: 15.10.2008
(73) Proprietor: Alcatel Lucent, 75008 Paris (FR)
(72) Inventor: Van den Berg, Eric, 2560 Nijlen (BE)
(74) Representative: Narmon, Gisèle Marie Thérèse

(56) References cited:
- FR-A1- 2 815 789
- US-A- 4 633 043
- US-A- 5 604 655

## Description

The present invention relates to a surge protection circuit for ORing circuitry of a plurality of power supplies coupled to a load, said ORing circuitry comprising a plurality of ORing devices each associated to a distinct power supply of said plurality of power supplies.

The use of ORing circuitry is generally known in the art and more particularly in telecommunication applications where several power supplies may be selectively connected to a load. Such known ORing circuitry is for instance described in the "Application Report - SLUA374C-January 2006-Revised August 2006" entitled "-48-V Supply Selection Circuit for TPS2350, Simplifies Fault Detection in ATCA Systems", by Jim Bird of Texas Instruments^{™}. A copy of this Application Report is available on the Internet at < http://focus.ti.com/lit/an/slua374c/slua374c.pdf>.

Therein is disclosed a method for controlling -48-V ORing circuitry to allow selection of the power source in dual feed -48 V telecom systems. Such control provides a powerful tool for diagnostic and load management functions. Hidden faults such as blown fuses and failed diodes can be found with this circuit. Fault detection in high availability and advanced telecommunications computing architecture (ATCA) systems is simpler and more effective.

The purpose of connecting several power supplies or sources, preferably but not exclusively telecom batteries, to the load is to ensure the continuation of power delivery in case of failure of one or more of these supplies. In telecom applications, although AC/DC or DC/DC converters may also be used, two batteries are generally used and the supply voltage provided thereby is typically of 60V_{DC} to comply with ANSI^{™} and ETSI^{™} recommendations or 48V_{DC} in case of applications that need only to comply with the for the ANSI^{™} recommendations.

Recent changes to the ITU-ETSI - K.20 specification require the telecom equipment to withstand high voltage surges on these supply lines. This is driven by the fact that more and more telecom equipment is deployed in remote units and in street cabinets, which makes the power lines more susceptible to surges and more particularly lightning surges.

In prior designs, it was more than sufficient to use 100V ORing circuitry to perform the battery ORing function. However, due to the introduction of the new K.20 standard, the ORing devices now have to withstand reverse voltage of 1kV or higher.

It is to be noted that a definition of the ITU - K.20 specification can for instance be found at:
http://www.haefelyemc.com/pdf_downloads/application_notes/A014_02ITU_Kseries_ Overview.pdf

The application of the new K.20 standard has several effects:
- a larger forward voltage drop resulting in higher voltage drops and higher thermal dissipation. This higher voltage drop, e.g. up to 1V, requires DC/DC converters typically found on the telecom equipments to be able to operate on wider supply range;
- a lower forward current capability; and
- an increased price, and even sole sourced for a current rating/ package combination that may be typically used on xDSL designs.

The larger forward voltage drop and the lower forward current capability can be compensated by using larger packages. However, this first possible solution of increasing in size the components of the ORing devices obviously leaves less space and also is at a relatively higher cost.

On the other hand, using ORing circuitry without either one of the previously mentioned drawbacks will lead to design products that are not fully compliant with the standard.

An object of the present invention is to provide a compact, low cost and low loss (with respect to temperature and power) solution for protecting the ORing circuitry against surges, e.g. lightning surges, and preferably to be compliant with a standard such as the above-mentioned K.20 standard.

According to the invention, this object is achieved due to the fact that said surge protection circuit comprises a plurality of capacitors, each capacitor of said plurality of capacitors being coupled in parallel across a distinct ORing device.

In this way, instead of trying to 'block' the surge that causes the high voltage to destroy the battery ORing circuitry, a low impedance path is provided to 'short' the surge.

Another characterizing embodiment of the present invention is that each ORing device is a diode.

In this redundant distribution of supply voltage, the telecom equipment typically uses two diodes in order to perform a logical OR function of the two redundant power lines into a single DC supply voltage.

A variant characterizing embodiment of the present invention is that each ORing device is a FET transistor.

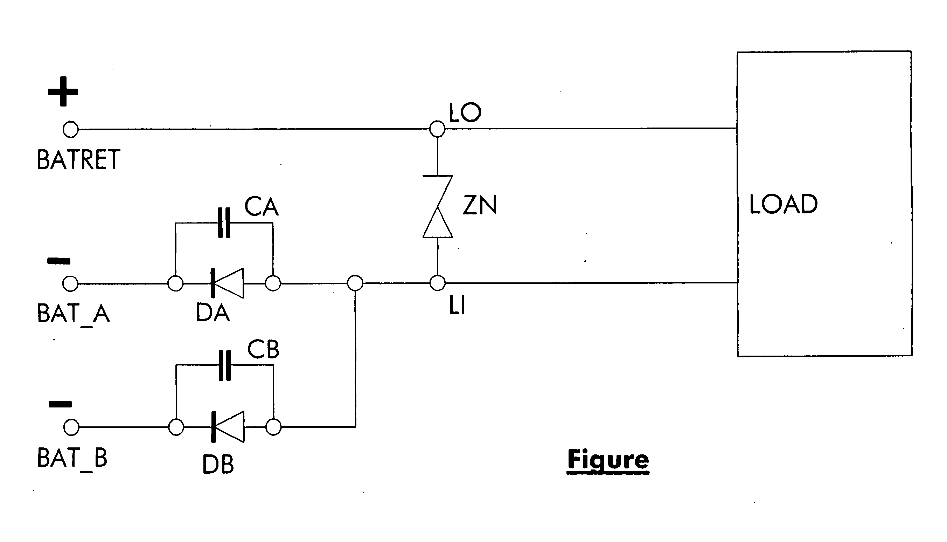

This case is for instance shown at Figure 2 "Power Feed Select Control Using the TPS2350" of the above mentioned known document wherein FET transistors Q3, Q5 and Q2, Q4 are used in the ORing circuitry instead of ORing diodes D3 and D4 as shown at Figure 1 "Typical Diode ORing Circuit" of the same document.

Also another characterizing embodiment of the present invention is that each power supply of said plurality of power supplies has a first supply terminal and a second supply terminal, that said load has a first and a second supply input, that each pair of parallel coupled ORing device and capacitor associated to a distinct power supply has a first terminal connected to the first supply terminal of a power supply and has a second terminal coupled to the first supply input of said load, and that the second supply input of said load is coupled to the second supply terminals of the power supplies of said plurality of power supplies.

In this way, the reverse voltage across each power supply ORing device is reduced. This allows using lower cost components, e.g. diodes, which in addition have overall improved specifications such as lower voltage drop, higher forward current capability, smaller packages but needing lower reverse voltage.

Yet another characterizing embodiment of the present invention is that a second ORing circuitry comprising a plurality of second ORing devices is provided between the second supply input of said load and the second supply terminals of the power supplies of said plurality of power supplies, that each second ORing device of said second ORing circuitry is associated to a distinct power supply of said plurality of power supplies, and that said surge protection circuit further comprises a plurality of second capacitors, each second capacitor being coupled in parallel across a distinct one of said second ORing devices.

In this way, the surge protection circuit not only protects the ORing circuitry coupled to the first supply terminals, but also protects second ORing circuitry coupled to the second supply terminals, as for instance shown at Figure 1 "Typical Diode ORing Circuit" of the above mentioned known document.

The present invention is further characterized in that a low impedance circuit is coupled between the first supply input and the second supply input of said load.

This low impedance circuit may either be a capacitor coupled across the first and the second supply input of said load, a DC-threshold circuit comprising a Zener diode, or the load itself showing a low impedance and adapted to withstand the surge energy.

An efficient solution for obtaining K20 compliancy on Telecom Network Voltage supplies is thereby provided.

Further characterizing embodiments of the present surge protection circuit are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein the single Figure represents a surge protection circuit for ORing circuitry of power supplies according to the invention.

The circuit shown at the Figure is used in telecommunication equipment where power has to be supplied to a load LOAD by means of at least two power sources. The purpose of connecting several power supplies or sources, preferably two telecom batteries, to the load is to ensure the continuation of power delivery in case of failure of one of these batteries. The supply voltage provided by each battery is typically of 60V_{DC} to comply with ANSI^{™} and ETSI^{™} recommendations or 48V_{DC} in case of applications that need only to comply with the ANSI^{™} recommendations. The load may for instance be a hot-insertion printed circuit board, a filter, a converter or any other kind of telecommunication circuit, and preferably shows a low impedance for surges.

Hereafter, the description will be made with reference to telecom equipment comprising only two batteries as power supplies coupled to a load. It is however to be noted that this kind of equipment is also useable in other applications and that the number of power supplies may be larger than two.

Each battery has a negative supply terminal BAT_A, BAT_B and a positive supply terminal. In the present example, the positive supply terminals of the two batteries are connected together into a single positive supply terminal BATRET. The negative supply terminal BAT_A of the first battery is connected to a first supply input LI of the load LOAD via the cathode-to-anode path of a first diode DA, whilst the negative supply terminal BAT_B of the second battery is connected to the same first supply input LI via the cathode-to-anode path of a second diode DB. The diodes DA and DB are distinct ORing devices that belong to an ORing circuitry. The diodes DA and DB are called ORing diodes because they perform a logical OR operation on the two redundant negative supply inputs at the terminals BAT_A and BAT_B into a single DC supply voltage applied to the terminal LI of the load.

A device that completes a low impedance path for shorting out the surges on the supply lines is provided as a low impedance circuit across the first supply input LI and the second supply input LO of the load.

This low impedance circuit may either be:
- a DC-threshold circuit constituted by a Zener diode ZN which has its anode connected to the first supply input LI and its cathode connected to the second supply input LO. When the voltage goes above the threshold, a low impedance path will be created;
- a bulk or bypass capacitor (not shown), operating more or less in the same way as the capacitors in parallel to the ORing devices of this invention; or
- the load LOAD itself, providing that this load has a low impedance and will be able to withstand the increased voltage caused by the surge energy.

In a variant embodiment, the Zener diode ZN may even be coupled in parallel with the capacitor.

The protection of the ORing diodes against surges such as lightning surges may be obtained by increasing the type of diodes. However, although the difference between a 600V diode and a 1kV diode seems small, the related other parameters, e.g. size, cost, forward voltage drop, ..., are highly impacted by this difference. Therefore, it is preferred to keep the relatively lower voltage diodes and to protect them by means of capacitors placed in parallel therewith.

A distinct capacitor CA, CB is therefore placed in parallel with each of the two battery ORing diodes DA, DB respectively. Each pair of parallel coupled ORing diode and capacitor DA-CA and DB-CB is associated to a distinct power supply, i.e. to a negative supply terminal BAT_A or BAT_B.

The capacitor CA, CB, together with the existing over-voltage and reverse voltage protection that may already be present on the board, creates a 'low impedance' path for the surge. This limits the surge voltage across the diode.

The larger the capacitance value of the capacitor, the lower that the surge voltage across the diode will remain. Therefore the capacitance value, and consequently also its physical size, needs to be balanced versus the reverse voltage capability of the diode. For a typical DSL LT [Digital Subscriber Line - Line Termination], a capacitor CA, CB up to 10µF and a diode DA, DB of 600V form the optimum balance.

As a consequence, instead of trying to 'block' the surge, what causes a high voltage destroying the battery ORing diode DA, DB, the parallel capacitor CA, CB provides a more fairly low impedance path to 'short' the surge.

It is to be noted that, although ORing devices used in the ORing circuitry described above are constituted by ORing diodes, variants of this ORing circuitry may be constituted by other active ORing devices such as for instance FET transistors.

It is also to be noted that in the present description only the first or negative supply terminals BAT_A and BAT_B of the two batteries are connected to ORing devices that are ORing diodes. However, in a variant embodiment, also the positive supply terminals of each battery may be connected to the common second supply input LO through distinct second ORing devices. Each coupling between a positive supply terminal of a battery and the second supply input LO should then be similar to that of a negative supply terminal of the battery, comprising an ORing device in parallel with a surge protection capacitor.

While the principles of the invention have been described above in connection with specific apparatus, it is to be clearly understood that this description is merely made by way of example and not as a limitation on the scope of the invention, as defined in the appended claims.

## Claims

1. A surge protection circuit for ORing circuitry of a plurality of power supplies coupled to a load (LOAD), said ORing circuitry comprising a plurality of ORing devices (DA, DB) each associated to a distinct power supply of said plurality of power supplies,
***characterized in that*** said surge protection circuit comprises a plurality of capacitors (CA, CB), each capacitor of said plurality of capacitors being coupled in parallel across a distinct ORing device (DA, DB).

2. The surge protection circuit according to claim **1,** ***characterized in that*** each ORing device is a diode (DA, DB).

3. The surge protection circuit according to claim **1, *characterized in that*** each ORing device is a FET transistor.

4. The surge protection circuit according to claim **1,**
***characterized in that*** each power supply of said plurality of power supplies has a first supply terminal (BAT_A, BAT_B) and a second supply terminal (BATRET),
***in that*** said load (LOAD) has a first (LI) and a second (LO) supply input,
***in that*** each pair of parallel coupled ORing device (DA, DB) and capacitor (CA, CB) associated to a distinct power supply has a first terminal connected to the first supply terminal of a power supply and has a second terminal coupled to the first supply input (Ll) of said load,
***and in that*** the second supply input (LO) of said load is coupled to the second supply terminals of the power supplies of said plurality of power supplies.

5. The surge protection circuit according to claim **4, *characterized in that*** the second supply input (LO) of said load is connected to all the second supply terminals of the power supplies of said plurality of power supplies.

6. The surge protection circuit according to claim **4,**
***characterized in that*** a second ORing circuitry comprising a plurality of second ORing devices is provided between the second supply input (LO) of said load and the second supply terminals of the power supplies of said plurality of power supplies,
***in that*** each second ORing device of said second ORing circuitry is associated to a distinct power supply of said plurality of power supplies,
***and in that*** said surge protection circuit further comprises a plurality of second capacitors, each second capacitor being coupled in parallel across a distinct one of said second ORing devices.

7. The surge protection circuit according to claim **4,** ***characterized in that*** a low impedance circuit (ZN) is coupled between the first supply input (LI) and the second supply input (LO) of said load (LOAD).

8. The surge protection circuit according to claim **7,** ***characterized in that*** said low impedance circuit (ZN) is a capacitor coupled across the first (LI) and the second (LO) supply input of said load.

9. The surge protection circuit according to claim **2,**
***characterized in that*** each power supply is a battery of which the first supply terminal (BAT_A, BAT_B) is the negative terminal and of which the second supply terminal (BATRET) is the positive terminal,
***and in that*** said first supply terminal is connected to the cathode of the associated ORing diode.

10. The surge protection circuit according to claim **7** and **9, *characterized in that*** said low impedance circuit is a DC-threshold circuit comprising a Zener diode (ZN) having an anode coupled to the first supply input (LI) of said load and a cathode coupled to the second supply input (LO) of said load.

11. The surge protection circuit according to claim **1**, ***characterized in that*** said surge protection circuit is used in a telecommunication application wherein said load (LOAD) is a telecommunication circuit.

## Patentansprüche

1. Eine Überspannungsschutzschaltung für ORing-Schaltung einer Vielzahl von Netzteilen, die mit einer Last (LOAD) gekoppelt sind, wobei die ORing-Schaltung eine Vielzahl von ORing-Geräten (DA, DB) umfaßt, von denen jedes mit einem verschiedenen Netzteil der Vielzahl der Netzteile verbunden ist,
***dadurch gekennzeichnet, daß*** die Überspannungsschutzschaltung eine Vielzahl von Kondensatoren (CA, CB) umfaßt, wobei jeder Kondensator der Vielzahl der Kondensatoren parallel über einem verschiedenen ORing-Gerät (DA, DB) gekoppelt wird.

2. Die Überspannungsschutzschaltung nach Anspruch **1 *dadurch gekennzeichnet, daß*** jedes ORing-Gerät eine Diode (DA, DB) ist.

3. Die Überspannungsschutzschaltung nach Anspruch **1 *dadurch gekennzeichnet, daß*** jedes ORing-Gerät FET-Transistor ist.

4. Die Überspannungsschutzschaltung nach Anspruch **1,**
***dadurch gekennzeichnet, daß*** jedes Netzteil der Vielzahl der Netzteile einen ersten Versorgungsanschluß (BAT_A, BAT_B) und einen zweiten Versorgungsanschluß (BATRET) hat, ***daß*** die Last (LOAD) einen ersten (LI) und einen zweiten (LO) Versorgungseingang hat,
***daß*** jedes Paar des parallel gekoppelten ORing-Geräts (DA, DB) und Kondensators (CA, CB), der mit einem verschiedenen Netzteil verbunden ist, einen ersten Anschluß hat, der mit dem ersten Versorgungsanschluß des Netzteils verbunden ist, und einen zweiten Anschluß hat, der mit dem ersten Versorgungseingang (LI) der Last verbunden ist,
***und daß*** der zweite Versorgungseingang (LO) der Last mit den zweiten Versorgungsanschlüssen der Netzteile der Vielzahl der Netzteile gekoppelt ist.

5. Die Überspannungsschutzschaltung nach Anspruch **4, *dadurch gekennzeichnet, daß*** der zweite Versorgungseingang (LO) der Last mit allen zweiten Versorgungsanschlüssen der Netzteile der Vielzahl der Netzteile verbunden ist.

6. Die Überspannungsschutzschaltung nach Anspruch **4,**
***dadurch gekennzeichnet, daß*** eine zweite ORing-Schaltung, die eine Vielzahl von zweiten ORing-Geräten umfaßt, zwischen dem zweiten Versorgungseingang (LO) der Last und den zweiten Versorgungsanschlüssen der Netzteile der Vielzahl der Netzteile bereitgestellt wird,
*daß* jedes zweite ORing-Gerät der zweiten ORing-Schaltung mit einem verschiedenen Netzteil der Vielzahl der Netzteile verbunden ist,
*und daß* die Überspannungsschutzschaltung außerdem eine Vielzahl von zweiten Kondensatoren umfaßt, wobei jeder zweite Kondensator parallel über ein verschiedenes der zweiten ORing-Geräte gekoppelt wird.

7. Die Überspannungsschutzschaltung nach Anspruch **4, *dadurch gekennzeichnet, daß*** eine niederohmige Schaltung (ZN) zwischen dem ersten Versorgungseingang (LI) und dem zweiten Versorgungseingang (LO) der Last (LOAD) gekoppelt ist.

8. Die Überspannungsschutzschaltung nach Anspruch **7, *dadurch gekennzeichnet, daß*** eine niederohmige Schaltung (ZN) ein Kondensator ist, der über dem ersten (LI) und dem zweiten (LO) Versorgungseingang der Last gekoppelt ist.

9. Die Überspannungsschutzschaltung nach Anspruch **2,**
***dadurch gekennzeichnet, daß*** jedes Netzteil eine Batterie ist, deren erster Versorgungsanschluß (BAT_A, BAT_B) der negative Anschluß und deren zweiter Versorgungsanschluß (BATRET) der positive Anschluß ist,
***und daß*** der erste Versorgungsanschluß mit der Kathode der zugehörigen ORing-Diode verbunden ist.

10. Die Überspannungsschutzschaltung nach Anspruch **7** und **9,**
***dadurch gekennzeichnet, daß*** die niederohmige Schaltung eine DC-Schwellwertschaltung ist, die eine Zener-Diode (ZN) umfaßt, die eine Anode, die mit dem ersten Versorgungseingang (LI) der Last gekoppelt ist, und eine Kathode, die mit dem zweiten Versorgungseingang (LO) der Last gekoppelt ist, aufweist.

11. Die Überspannungsschutzschaltung nach Anspruch **1, *dadurch gekennzeichnet, daß*** die Überspannungsschutzschaltung in einer Telekommunikationsanwendung verwendet wird, in welcher die Last (LOAD) eine Telekommunikationsschaltung ist.

## Revendications

1. Circuit de protection contre les surtensions pour les circuits de joints toriques d'une pluralité de blocs d'alimentation couplés à une charge (LOAD), lesdits circuits de joints toriques comprenant une pluralité de joints toriques (DA, DB), chacun associé à un bloc d'alimentation distinct de ladite pluralité de blocs d'alimentation,
***caractérisé en ce que*** ledit circuit de protection contre les surtensions comprend une pluralité de condensateurs (CA, CB), chaque condensateur de ladite pluralité de condensateurs étant couplé en parallèle sur un joint torique distinct (DA, DB).

2. Circuit de protection contre les surtensions selon la revendication **1, *caractérisé en* ce *que*** chaque joint torique est une diode (DA, DB).

3. Circuit de protection contre les surtensions selon la revendication **1, *caractérisé en ce que*** chaque joint torique est un transistor à effet de champ.

4. Circuit de protection contre les surtensions selon la revendication **1,**
***caractérisé en* ce *que*** chaque bloc d'alimentation de ladite pluralité de blocs d'alimentation possède un premier terminal d'alimentation (BAT_A, BAT_B) et un second terminal d'alimentation (BATRET),
***en ce que*** ladite charge (LOAD) possède une première (LI) et une seconde (LO) entrée d'alimentation,
***en ce que*** chaque paire de joint torique (DA, DB) et de condensateur (CA, CB) couplés en parallèle associée à un bloc d'alimentation distinct possède un premier terminal connecté au premier terminal d'alimentation du bloc d'alimentation et un second terminal couplé à la première entrée d'alimentation (LI) de ladite charge,
*et **en ce que*** la seconde entrée d'alimentation (LO) de ladite charge est couplée aux seconds terminaux d'alimentation des blocs d'alimentation de ladite pluralité de blocs d'alimentation.

5. Circuit de protection contre les surtensions selon la revendication **4, *caractérisé en ce que*** la seconde entrée d'alimentation (LO) de ladite charge est couplée à tous les seconds terminaux d'alimentation des blocs d'alimentation de ladite pluralité de blocs d'alimentation.

6. Circuit de protection contre les surtensions selon la revendication **4,**
***caractérisé en ce que*** des seconds circuits de joints toriques comprenant une pluralité de seconds joints toriques sont prévus entre la seconde entrée d'alimentation (LO) de ladite charge et les seconds terminaux d'alimentation des blocs d'alimentation de ladite pluralité de blocs d'alimentation,
***en ce que*** chaque second joint torique desdits seconds circuits de joints toriques est associé à un bloc d'alimentation distinct de ladite pluralité de blocs d'alimentation,
*et **en ce que*** ledit circuit de protection contre les surtensions comprend en outre une pluralité de seconds condensateurs, chaque second condensateur étant couplé en parallèle sur l'un distinct desdits seconds joints toriques.

7. Circuit de protection contre les surtensions selon la revendication **4, *caractérisé en ce qu'***un circuit à faible impédance (ZN) est couplé entre la première entrée d'alimentation (LI) et la seconde entrée d'alimentation (LO) de ladite charge (LOAD).

8. Circuit de protection contre les surtensions selon la revendication **7, *caractérisé en ce que*** ledit circuit à faible impédance (ZN) est un condensateur couplé entre la première (LI) et la seconde entrée d'alimentation (LO) de ladite charge.

9. Circuit de protection contre les surtensions selon la revendication **2,**
***caractérisé en ce que*** chaque bloc d'alimentation est une batterie dont le premier terminal d'alimentation (BAT_A, BAT_B) est la borne négative et dont le second terminal d'alimentation (BATRET) est la borne positive,
***et en ce que*** ledit premier terminal d'alimentation est connecté à la cathode de la diode de joint torique associée.

10. Circuit de protection contre les surtensions selon les revendications **7** et **9, *caractérisé en ce que*** ledit circuit à faible impédance est un circuit à seuil continu comprenant une diode Zener (ZN) possédant une anode couplée à la première entrée d'alimentation (LI) de ladite charge et une cathode couplée à la seconde entrée d'alimentation (LO) de ladite charge.

11. Circuit de protection contre les surtensions selon la revendication **1, *caractérisé en* ce *que*** ledit circuit de protection contre les surtensions est utilisé dans une application de télécommunications, dans laquelle ladite charge (LOAD) est un circuit de télécommunications.
